# EUROPEAN PATENT APPLICATION

(11) **EP 4 331 448 A1**
(43) Date of publication of application: **06.03.2024**
(21) Application number: 22796060.6
(22) Date of filing: 25.04.2022
(51) Int. Cl.: A47J 37/10, A47J 36/02

(54) **MULTI-PURPOSE COOKING APPLIANCE HAVING PRESSING PLATE**

(30) Priority: 27.04.2021 KR 20210054028
(71) Applicant: Hong San Light Metal Co., Ltd., Busan 49444 (KR)
(72) Inventor: SEO, Gyung Chan, Busan 46723 (KR)
(74) Representative: Ipey
(86) International application number: PCT/KR2022/005841
(87) International publication number: WO 2022/231227

(57) **Abstract**

The present invention relates to a multi-purpose cooking appliance having a pressing plate and, more particularly, to a multi-purpose cooking appliance having a pressing plate which provides an improved structure that allows the pressing plate to gently press food by elastic force when a lid is closed for cooking, enabling quick and convenient cooking while also allowing for a variety of dishes. According to the present invention, various dishes are possible by providing an improved structure that allows the pressing plate provided in the multi-purpose cooking appliance to gently press food by elastic force when the lid is closed for cooking, and quick and convenient cooking is possible to improve the convenience of cooking. In addition, usage and maintenance, such as cleaning, are also made convenient by detachably mounting the pressing plate on the bottom of the lid.

## Description

### Technical Field

The present disclosure relates generally to a multi-purpose cooking appliance having a pressing plate. More particularly, the present disclosure relates to a multi-purpose cooking appliance having a pressing plate, the multi-purpose cooking appliance providing an improved structure that allows the pressing plate to gently press food by elastic force when a lid is closed for cooking, thereby enabling quick and convenient cooking while enabling cooking of a variety of dishes.

### Background Art

In general, a multi-purpose cooker is a cooking appliance used to enable various types of cooking operations in place of a limited-use cooking appliance, which can be used only for one purpose such as steaming or grilling food. That is, pots are used for steaming or boiling food, and pans are used for grilling food. Although such a multi-purpose cooking appliance has been proposed to be used for grilling as well as steaming or boiling, it can be used without clearly distinguishing the purpose depending on users.

Korean Patent Application Publication No. 10-2011-0021541 (published on March 4, 2011) discloses a multi-purpose cooking vessel that enables grilling by allowing inflow of direct heat through a direct heat inlet, as well as steaming by closing the direct heat inlet. While the use of direct heat has the advantage for grilling, it is also somewhat inconvenient for cooking soup.

Modern people are restricted from doing outdoor activities due to various contagious viruses as well as busy daily life, so more people enjoy cooking at home and they hope to enjoy simple yet delicious dishes. To meet such modern people's demands, an urgent need exists to develop various types of cooking appliances.

### Disclosure

### Technical Problem

Accordingly, the present disclosure has been made keeping in mind the above problems occurring in the related art, and an objective of the present disclosure is to provide a multi-purpose cooking appliance having a pressing plate, the multi-purpose cooking appliance providing an improved structure that allows the pressing plate to gently press food by elastic force when a lid is closed for cooking, thereby enabling quick and convenient cooking while enabling cooking of a variety of dishes.

### Technical Solution

In order to accomplish the above objective, the present disclosure provides a multi-purpose cooking appliance having a pressing plate, the multi-purpose cooking appliance including: a cooking vessel comprising a main body having a cooking space with an open top to allow food to be cooked therein, a lid configured to seal the cooking space, and a handle provided on one side of the main body and configured to be held by a user's hand when lifting the main body; and the pressing plate configured to be elastically supported on a lower surface of the lid and press the food gently by elastic force when the lid is closed on a top of the food placed on a bottom of the cooking space of the main body.

The pressing plate may be detachably mounted on the lower surface of the lid.

The pressing plate may include: a pressing plate body configured to be inserted into the cooking space of the main body and placed on the top of the food placed on the bottom of the cooking space, and provided with a coupling portion on an upper surface thereof; and an elastic member coupled to the coupling portion of the pressing plate body and configured to be elastically supported on the lower surface of the lid when the lid is closed.

The elastic member may be made of a silicon material and has a hollow space therein.

The elastic member may include a spring to improve elasticity, and the spring may be provided inside the hollow space of the elastic member or integrally embedded in an outer wall of the hollow space.

A band may be fitted over a lower end of the elastic member to block foreign substances from flowing into the elastic member and prevent the elastic member from being arbitrarily separated, and the elastic member may be fastened to the coupling portion through a screw.

The pressing plate body may be formed in a mesh shape with a plurality of through-holes.

### Advantageous Effects

According to the present disclosure having the above-described configuration, by providing an improved structure that allows a pressing plate provided in a multi-purpose cooking appliance to gently press food by elastic force when a lid is closed for cooking, it is possible to enable cooking of a variety of dishes, and enable quick and convenient cooking, thereby improving the convenience of cooking.

In addition, by detachably mounting the pressing plate on a lower surface of the lid, it is possible to improve the convenience of use and convenience in maintenance such as cleaning.

### Description of Drawings

FIG. 1 is a perspective view illustrating a multi-purpose cooking appliance having a pressing plate according to an embodiment of the present disclosure.
FIGS. 2A and 2B are perspective views illustrating a cooking vessel according to an embodiment of the present disclosure.
FIG. 3 is a perspective view illustrating a cooking vessel according to another embodiment of the present disclosure.
FIG. 4A is a perspective view illustrating a pressing plate according to an embodiment of the present disclosure, FIG. 4B is a longitudinal cross-sectional view illustrating the pressing plate, and FIG. 4C is a bottom view illustrating the pressing plate.
FIG. 5 is a plan view illustrating a pressing plate body according to an embodiment of the present disclosure.
FIG. 6 A is a longitudinal cross-sectional view illustrating an elastic member according to an embodiment of the present disclosure, FIG. 6B is a longitudinal cross-sectional view illustrating an elastic member according to another embodiment, and FIG. 6C is a longitudinal cross-sectional view illustrating an elastic member according to another embodiment.
FIGS. 7A and 7B are longitudinal cross-sectional views illustrating a fastening state of a pressing plate according to an embodiment of the present disclosure.
FIG. 8A is a longitudinal cross-sectional view illustrating a fastening state of a pressing plate according to another embodiment of the present disclosure, FIG. 8B is a longitudinal cross-sectional view illustrating a fastening state of a pressing plate according to another embodiment, and FIG. 8C is a longitudinal cross-sectional view illustrating a fastening state of a pressing plate according to another embodiment.
FIGS. 9A and B are longitudinal sectional views illustrating a use state of a multi-purpose cooking appliance having a pressing plate according to an embodiment of the present disclosure.

### <Description of the Reference Numerals in the Drawings>

100,100a: cooking vessel 110: main body
112: cooking space 120: lid
122: lid handle 124: fixing member
125: rail groove 125a: insertion recess
126: hinge 130: handle
140: fixing means 200: pressing plate
210, 210a: pressing plate body 212: coupling portion
220: elastic member 222: rail protrusion
224: spring 224a: insertion protrusion
224b: magnet 224c: adsorption portion
230: band 300: food

### Best Mode

Reference will now be made in greater detail to a multi-purpose cooking appliance having a pressing plate according to the present disclosure with reference to the accompanying drawings.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Specific structural and functional descriptions of embodiments of the present disclosure disclosed herein are only for illustrative purposes of the preferred embodiments of the present disclosure, and the present description is not intended to represent all of the technical spirit of the present disclosure. On the contrary, the present disclosure is intended to cover not only the exemplary embodiments, but also various alternatives, modifications, equivalents, and other embodiments that may be included within the spirit and scope of the present disclosure as defined by the appended claims.

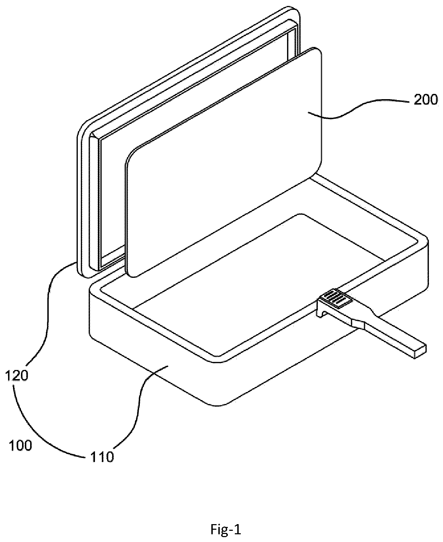

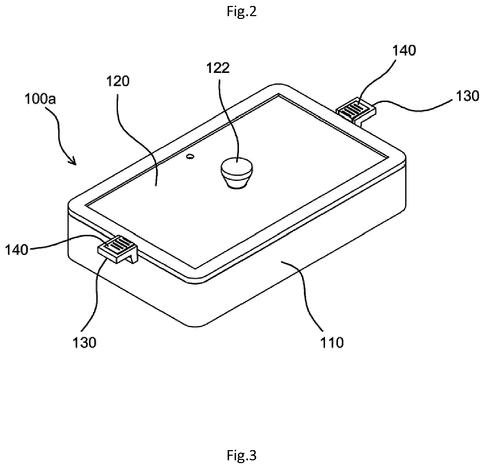

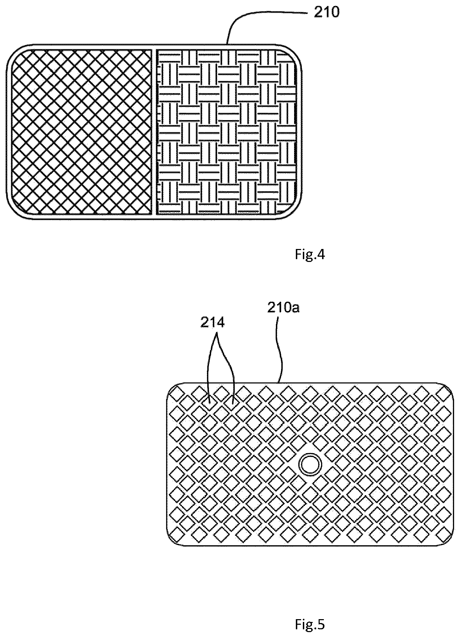

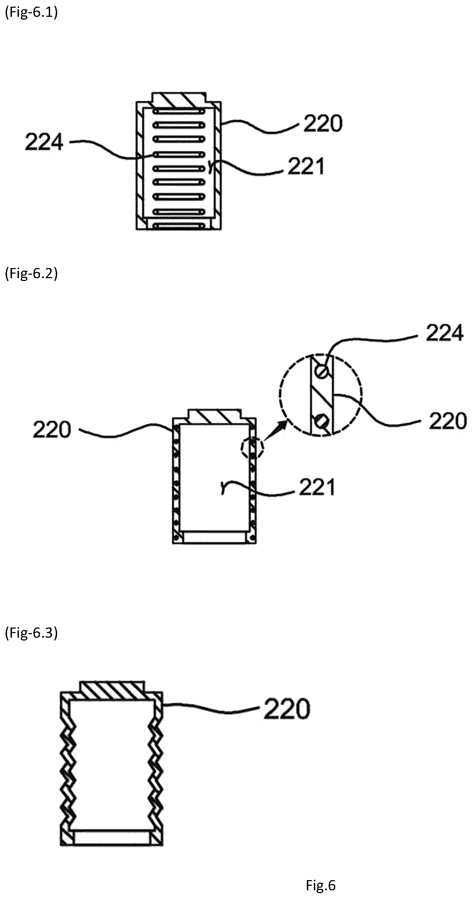

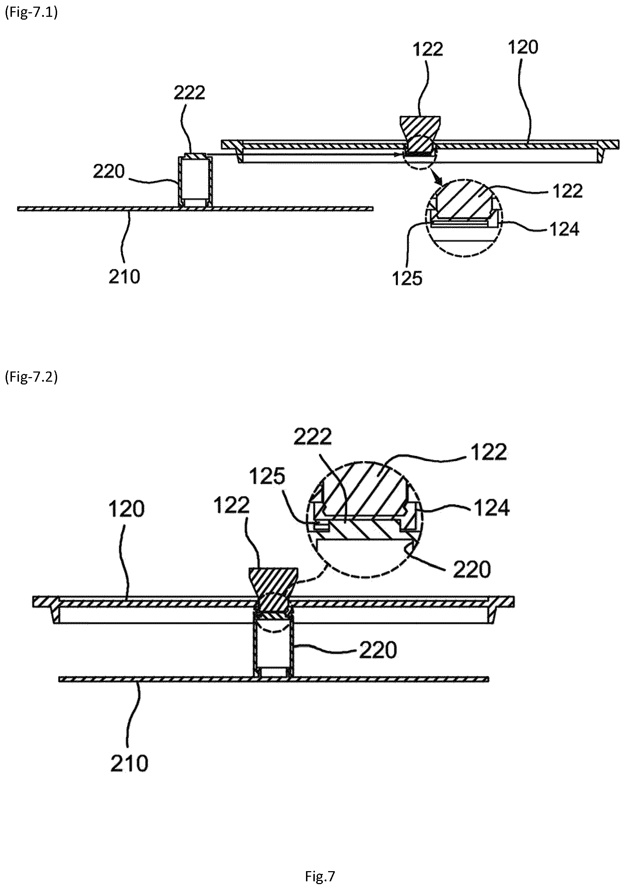

FIG. 1 is a perspective view illustrating a multi-purpose cooking appliance having a pressing plate according to an embodiment of the present disclosure. FIGS. 2A and 2B are perspective views illustrating a cooking vessel according to an embodiment of the present disclosure. FIG. 3 is a perspective view illustrating a cooking vessel according to another embodiment of the present disclosure. FIG. 4A is a perspective view illustrating a pressing plate according to an embodiment of the present disclosure, FIG. 4B is a longitudinal cross-sectional view illustrating the pressing plate, and FIG. 4C is a bottom view illustrating the pressing plate. FIG. 5 is a plan view illustrating a pressing plate body according to an embodiment of the present disclosure. FIG. 6 A is a longitudinal cross-sectional view illustrating an elastic member according to an embodiment of the present disclosure, FIG. 6B is a longitudinal cross-sectional view illustrating an elastic member according to another embodiment, and FIG. 6C is a longitudinal cross-sectional view illustrating an elastic member according to another embodiment. FIGS. 7A and 7B are longitudinal cross-sectional views illustrating a fastening state of a pressing plate according to an embodiment of the present disclosure.

First, referring to FIGS. 1 to 7, the multi-purpose cooking appliance having the pressing plate according to the present disclosure largely includes the cooking vessel 100 and the pressing plate 200.

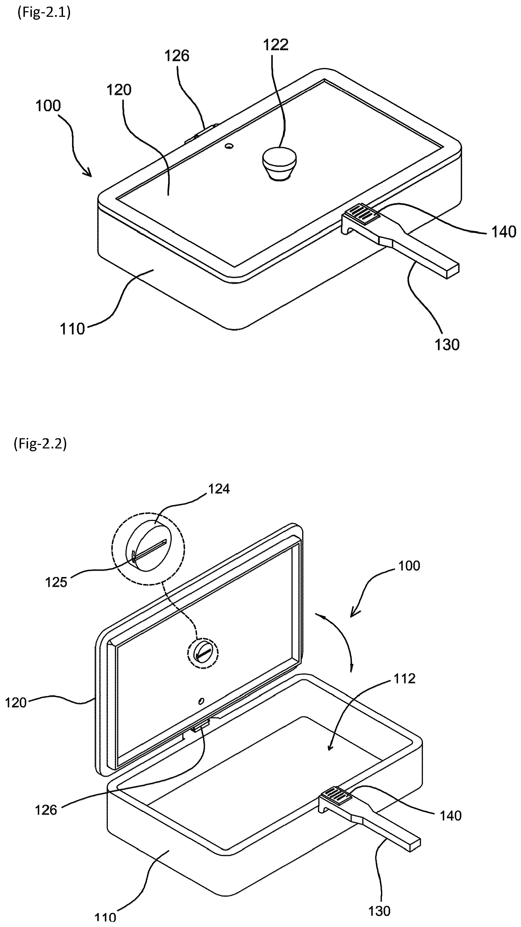

As illustrated in FIG. 2, the cooking vessel 100 includes a main body 110, a lid 120, a handle 130, and a fixing means 140.

The main body 110 has a cooking space 112 with an open top to allow food to be cooked therein. In a preferred example, the main body 11 has a rectangular shape in a plan view. However, the shape of the main body 110 is not limited thereto, and various shapes such as circular and elliptical may be possible.

The lid 120 seals the cooking space 112. The lid 120 may be made of a glass material or a metal material. The lid 120 may be configured as one of the following: a type which is coupled to an upper rear side of the main body 110 through a hinge 126 to rotationally open and close the cooking space 112; or a type which is completely removed from the main body 110 to open and close the cooking space 112 (see FIG. 3, which illustrates the cooking vessel 110a according to another embodiment).

The handle 130 is provided on one side of the main body 110 to be held by a user's hand when lifting the main body 110. The handle 130 may be configured as one of the following: a one side type which is provided on one side of the main body 110; or a double side type which is provided on each side of the main body 110 (see FIG. 3).

The fixing means 140 fastens the lid 120 to the main body 110 to prevent the lid 120 from being arbitrarily opened and closed. The fixing means 140 may be configured as a magnet, a ring, or a slider. In the present disclosure, the fixing means 140 is described as being a slider which is mounted to the handle 130 and slid to the top of the lid 120 to fix the lid 120. Since this fixing means 140 is well known, a detailed description thereof will be omitted herein.

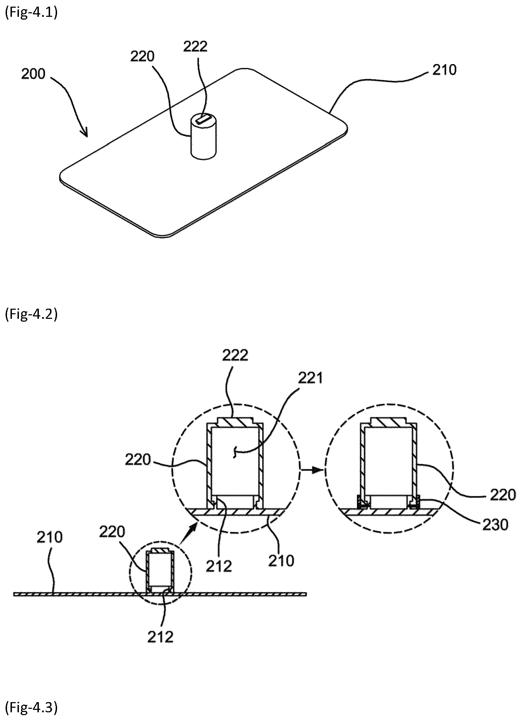

The pressing plate 200 is elastically supported on a lower surface of the lid 120 and presses food gently by elastic force when the lid 120 is closed on the top of the food placed on the bottom of the cooking space 112 of the main body 110. As illustrated in FIG. 4, the pressing plate 200 is inserted into the cooking space 112 of the main body 110 and placed on the top of the food placed on the bottom of the cooking space 112. The pressing plate 200 includes a pressing plate body 210 having a coupling portion 212 on an upper surface thereof, and an elastic member 220 coupled to the coupling portion 212 of the pressing plate body 210 and elastically supported on the lower surface of the lid 120 when the lid 120 is closed.

Meanwhile, the lid 120 and the pressing plate 200 may be configured as separate parts so that when the pressing plate 200 is inserted into the main body 110 and the lid 120 is closed, the elastic member 220 gently presses food while being elastically supported on the lower surface of the lid 120. However, since this requires a separate operation of opening the lid 120 and taking out the pressing plate 110 again, it is preferable that the pressing plate 200 is configured to be fastened to the lower surface of the lid 120. That is, when the pressing plate 200 is fastened to the lid 120 and the lid 120 is closed, the pressing plate 200 is elastically supported on the lid 120, and when the lid 120 is opened, the pressing plate 200 is moved in conjunction with the movement of the lid 120. Thus, the convenience of use is improved. Furthermore, as illustrated in FIGS. 7A and 7B, it is preferable that the pressing plate 200 is detachably mounted on the lower surface of the lid 120 rather than being completely fixedly fastened thereto so as to improve the convenience in maintenance such as cleaning. That is, a rail groove 125 is formed in a lower surface of a fixing member 124 for fixing a lid handle 122 on the lower surface of the lid 120 and a rail protrusion 222 is formed on an upper surface of the elastic member 220 to be inserted into the rail groove 125 so that the pressing plate 200 is fastened to the lid 120 by laterally inserting the rail protrusion 222 into the rail groove 125. As described above, it is preferable that the pressing plate 200 is detachably fastened to the lid 120. A detachable engagement method of the pressing plate 200 may be implemented in various ways, and examples thereof will be described below.

The pressing plate body 210 may be formed in various shapes according to the shape of the main body 110. The pressing plate body 210 may have on a lower surface thereof patterns of various shapes that leave a pattern on the surface of food to be cooked to improve aesthetics. In addition, as illustrated in FIG. 5, the pressing plate body 210 may be formed in a mesh shape with a plurality of through-holes 214.

Here, it is sufficient that the elastic member 220 is made of a material having elasticity. However, it is preferable that the elastic member 220 has a hollow space 221 therein with an open bottom, is made of an elastic silicone material, and is coupled to the coupling portion 212. Here, as illustrated in FIGS. 6A and 6B, the elastic member 220 may include a spring 224 to improve elasticity. It is preferable that the spring 224 is located inside the hollow space 221 or integrally embedded in an outer wall of the hollow space 221. In addition, as illustrated in FIG. 6C, the elastic member 220 may be formed in a bellows shape to facilitate contraction of the elastic member 220.

Meanwhile, as illustrated in a partially enlarged view of FIG. 4, a band 230 may be fitted over the outer periphery of a lower end of the elastic member 220 and the elastic member 220 may be fixed with a screw so that the elastic member 220 is prevented from being arbitrarily separated and foreign substances or oil from flowing into the elastic member 220 through a gap.

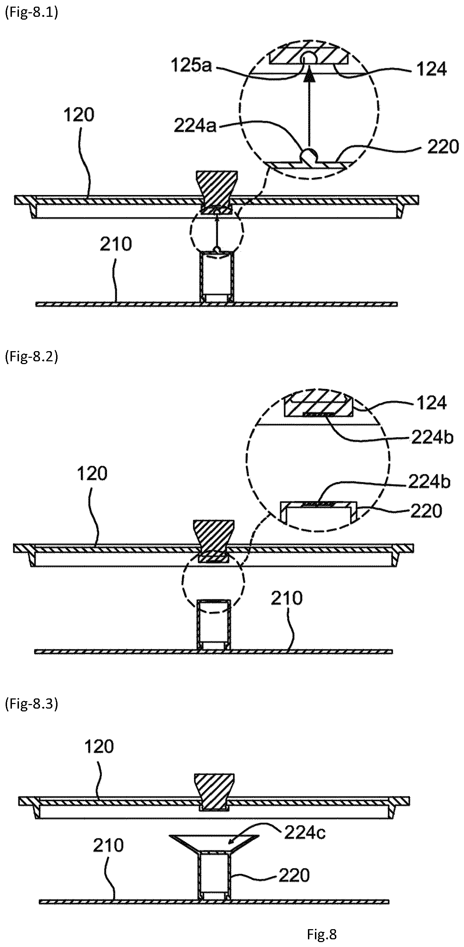

FIG. 8A is a longitudinal cross-sectional view illustrating a fastening state of a pressing plate according to another embodiment of the present disclosure, FIG. 8B is a longitudinal cross-sectional view illustrating a fastening state of a pressing plate according to another embodiment, and FIG. 8C is a longitudinal cross-sectional view illustrating a fastening state of a pressing plate according to another embodiment.

First, referring to FIG. 8A, an insertion recess 125a is formed in the fixing member 124 on the lower surface of the lid 120 and an insertion protrusion 224a is formed on an upper surface of an elastic member 220 of the pressing plate 200 so that the pressing plate 200 is coupled to the lid 120 by inserting the insertion protrusion 224a into the insertion recess 125a. Referring to FIG. 8B, a magnet 224b is provided on each of the fixing member 124 and the elastic member 220 so that the pressing plate 200 is detachably coupled to the lid 120 by magnetic force. Referring to FIG. 8C, an adsorption portion 224c is formed on the top of the elastic member 220 so that the pressing plate 200 is detachably coupled to the lower surface of the lid 120 by vacuum adsorption. As described above, although various detachable engagement methods of the pressing plate 200 have been described, the present disclosure is not limited to thereto and any method may be adopted as long as the pressing plate 200 can be detachably coupled to the lid 120.

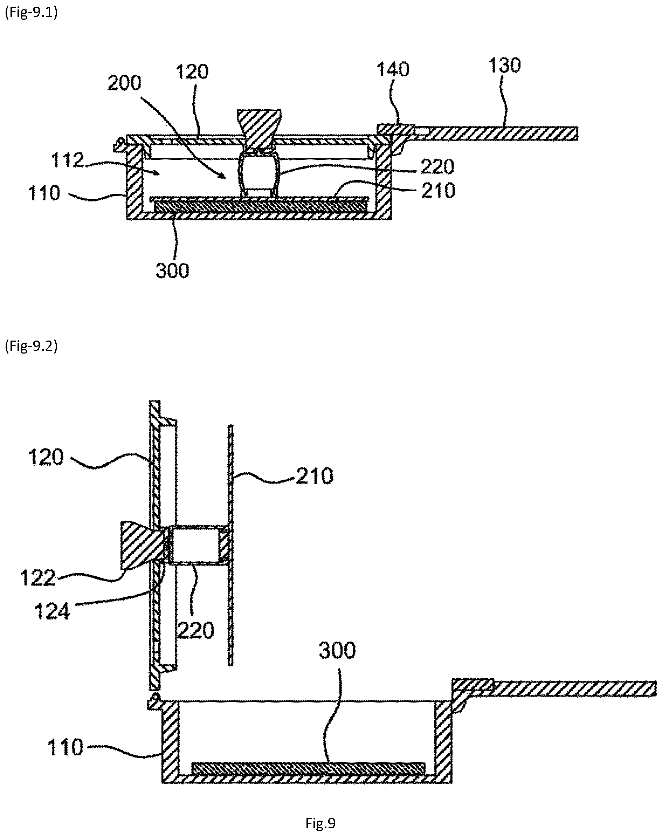

FIGS. 9A and 9B are longitudinal cross-sectional views illustrating a use state of a multi-purpose cooking appliance having a pressing plate according to an embodiment of the present disclosure.

First, referring to FIG. 9A, the pressing plate 200 is mounted on a lower surface of a lid 120. When the lid 120 is opened, food 300 to be cooked is placed on the bottom of a cooking space 112 of a main body 110, and the lid 120 is closed as illustrated in FIG. 9B, a pressing plate body 210 gently presses the food 300 to be cooked as an elastic member 220 of the pressing plate 200 is elastically supported on the lower surface of the lid 120. In this state, when the bottom of the cooking space 112 is heated through a heating device, the food 300 is cooked quickly as well as cooked evenly since it is placed in close contact with the bottom of the cooking space 112.

In particular, when dried squid or dried filefish is directly grilled above a heat source such as a gas stove, it tends to curl up and thus is difficult to grill. However, as in the present disclosure, when dried squid or dried filefish is placed in the main body 110 and grilled while being pressed with the pressing plate 200, it can be grilled evenly without curling up.

When the food 300 to be cooked needs to be turned over, the lid 120 is opened. Here, the pressing plate 200 is opened together with the lid 120 since it is fastened to the lower surface of the lid 120. When the user closes the lid 120 again after turning over the food 300 through the open cooking space 112, the pressing plate 200 gently presses the opposite side of the food 300. Although the present disclosure has been described as being used to cook dried squid or dried filefish as an example, the present disclosure is not limited thereto and may be used to cook other various dishes such as pancakes, grilled sweet potatoes or potatoes, and pizza.

The foregoing has broadly outlined the features and technical advantages of the present disclosure in order that the detailed description of the disclosure that follows may be better understood. Although embodiments of the present disclosure and their features and technical advantages have been described in detail, it should be appreciated by those skilled in the art that such specific details disclosed herein are merely representative for purposes of helping more comprehensive understanding of the present disclosure. The present disclosure, however, is not limited to only the example embodiments set forth herein, and those skilled in the art will appreciate that the present disclosure can be embodied in many alternate forms.

Accordingly, the present disclosure is intended to cover not only the exemplary embodiments, but also various alternatives, modifications, equivalents, and other embodiments that may be included within the spirit and scope of the present disclosure as defined by the appended claims.

## Claims

1. A multi-purpose cooking appliance having a pressing plate, the multi-purpose cooking appliance comprising:
a cooking vessel comprising a main body having a cooking space with an open top to allow food to be cooked therein, a lid configured to seal the cooking space, and a handle provided on one side of the main body and configured to be held by a user's hand when lifting the main body; and
the pressing plate configured to be elastically supported on a lower surface of the lid and press the food gently by elastic force when the lid is closed on a top of the food placed on a bottom of the cooking space of the main body.

2. The multi-purpose cooking appliance of claim 1, wherein the pressing plate is detachably mounted on the lower surface of the lid.

3. The multi-purpose cooking appliance of claim 1, wherein the pressing plate comprises: a pressing plate body configured to be inserted into the cooking space of the main body and placed on the top of the food placed on the bottom of the cooking space, and provided with a coupling portion on an upper surface thereof; and
an elastic member coupled to the coupling portion of the pressing plate body and configured to be elastically supported on the lower surface of the lid when the lid is closed.

4. The multi-purpose cooking appliance of claim 3, wherein the elastic member is made of a silicon material and has a hollow space therein.

5. The multi-purpose cooking appliance of claim 4, wherein the elastic member comprises a spring to improve elasticity, and
the spring is provided inside the hollow space of the elastic member or integrally embedded in an outer wall of the hollow space.

6. The multi-purpose cooking appliance of claim 3, wherein a band is fitted over a lower end of the elastic member to block foreign substances from flowing into the elastic member and prevent the elastic member from being arbitrarily separated, and the elastic member is fastened to the coupling portion through a screw.

7. The multi-purpose cooking appliance of claim 3, wherein the pressing plate body is formed in a mesh shape with a plurality of through-holes.
